# EUROPÄISCHE PATENTSCHRIFT

(11) **EP 0 599 899 B1**
(45) Veröffentlichungstag und Bekanntmachung des Hinweises auf die Patenterteilung: **09.10.1996**
(21) Anmeldenummer: 92917009.0
(22) Anmeldetag: 13.08.1992
(51) Int. Cl.: F16L 47/02, F16L 13/10

(54) **MUFFE ZUM VERBINDEN VON ROHRENDEN DURCH INJIZIEREN VON KLEBSTOFF**
SLEEVE FOR CONNECTING PIPE ENDS BY ADHESIVE INJECTION
MANCHON D'ACCOUPLEMENT D'EXTREMITES DE TUYAUX PAR INJECTION D'ADHESIF

(30) Priorität: 22.08.1991 DE 4127775
(43) Veröffentlichungstag der Anmeldung: 08.06.1994
(73) Patentinhaber: Henkel Kommanditgesellschaft auf Aktien, 40191 Düsseldorf (DE)
(72) Erfinder: Dierdorf, Hans-Rolf, D-4018 Langenfeld (DE)
(86) Internationale Anmeldenummer: EP9201847
(87) Internationale Veröffentlichungsnummer: WO9304311

(56) Entgegenhaltungen:
- CH-A- 661 109
- FR-A- 1 476 758
- US-A- 3 916 502

## Beschreibung

Die Erfindung betrifft eine Muffe zum Verbinden zweier Rohrenden durch Injizieren von Klebstoff in zwei Ringräume, die zwischen der Außenfläche der Rohrenden und der Innenfläche der Muffe gebildet sind. Der rohrförmige Grundkörper der Muffe weist einen sich von seiner Innenfläche radial nach innen erstreckenden Vorsprung auf, dessen Seitenflächen einen Anschlag für die Stirnflächen der Rohrenden bilden. Die als Zentrier- und Dichtringe vorgesehenen Ringkörper haben eine radial nach innen gerichtete, zur Anlage an den Stirnflächen des Grundkörpers ausgebildete Fläche und eine sich axial erstreckende, zur Anlage an einer der Mantelflächen des Grundkörpers ausgebildete Fläche. Ein Ringsteg ist an jeder Seite des Vorsprungs angeordnet, läuft an der inneren Mantelfläche des Grundkörpers um und ist zum dichtenden und zentrierten Einsetzen der Rohrenden ausgebildet. Der Grundkörper, die Ringkörper und die Ringstege sind nach dem Spritzgußverfahren hergestellt.

Eine derartige Muffe ist aus der DE 31 09 422 A1 bekannt. Zum Verbinden der Rohrenden werden diese von entgegengesetzten Seiten in den Grundkörper der Muffe bis an den als Anschlag dienenden, an der inneren Mantelfläche des Grundkörpers umlaufenden Vorsprung eingeschoben und die als Zentrier- und Dichtringe vorgesehenen Ringkörper werden an den Enden des Grundköpers zwischen diesem und der Außenfläche der Rohrenden festgeklemmt. Durch ein oder mehrere Injektionsöffnungen wird in den zwischen der Außenfläche der Rohrenden und der Muffeninnenfläche gebildeten Ringraum Klebstoff eingespritzt und damit eine gas- und wasserdichte Verbindung der Rohre erreicht.

Die zu verbindenden Kunststoffrohre sind in manchen Fällen durch längere Lagerung und Wärmeeinfluß verformt und nicht mehr rund, sondern oval. Ferner schwanken die Wandstärken und die Außendurchmesser der Rohre. Um dennoch für eine sichere Injektionsverklebung einen umlaufenden Ringraum mit an jeder Stelle des Umfangs ausreichender Dicke zu erreichen, sind zum einen die an den Enden des Grundkörpers anzusetzenden Ringkörper vorgesehen. Dem gleichen Zweck dient der an jeder Seite des Vorsprungs vorgesehene umlaufende Ringsteg an der Innenfläche der Muffe. Ringkörper und Ringstege sollen außerdem den Austritt von Klebstoff verhindern.

Die Muffe ist nach dem Spritzgußverfahren aus Kunststoff hergestellt. Große Stückzahlen werden auf wirtschaftliche Weise nur dann erreicht, wenn möglichst wenige Vor- oder Rücksprünge vorgesehen sind. Der Grundkörper der bekannten Muffe mit dem umlaufenden Ringsteg ist jedoch einstückig ausgeführt und die Höhe des den Ringsteg bildende Vorsprung ist relativ gering, so daß beim Spritzgießen des Grundkörpers Probleme auftreten.

Der Erfindung liegt daher die Aufgabe zugrunde, eine Muffe der eingangs genannten Art zu schaffen, die sich besser für die Herstellung in großen Stückzahlen nach dem Spritzgußverfahren eignet.

Diese Aufgabe wird erfindungsgemäß dadurch gelöst, daß der Grundkörper und die Ringstege aus separaten Teilen bestehen, jeder Ringsteg ein rohrförmiger, an der inneren Mantelfläche des Grundkörpers anliegender Zentrier- und Dichtring ist und die innere Mantelfläche des Grundkörpers im Bereich des Vorsprungs bis auf diesen keine Voroder Rücksprünge aufweist.

Durch den Wegfall der relativ kleinen Stufe an der Innenfläche des Muffengrundkörpers wird das Spritzgießen erheblich erleichtert. Die notwendige, oben erwähnte Zentrierung und Abdichtung im Bereich des inneren radialen Vorsprungs wird durch die separaten, anstelle der Ringstege tretenden Zentrier- und Dichtringe bewirkt.

Nicht nur Vor- und Rücksprünge mit relativ geringen Abmessungen, sondern Vor- und Rücksprünge überhaupt sind hinderlich für die Herstellung nach dem Spritzgußverfahren. Bei der eingangs erwähnten bekannten Muffe greifen die an den Enden des Grundkörpers anzusetzenden Ringkörper in eine innen umlaufende Schulter des Grundkörpers ein. Vorgeschlagen wird daher, daß die innere Mantelfläche des Grundkörpers bis auf den Vorsprung und eventuelle Injektionsöffnungen keine Vor- oder Rücksprünge aufweist. Erfindungsgemäß kann die notwendige Zentrierung und Abdichtung nämlich erreicht werden, wenn die Ringkörper an die glatte Mantelfläche des Grundkörpers angesetzt werden. Schultern, Nuten und Vertiefungen sind nicht notwendig.

Zur einfacheren Handhabung der Muffe beim Vorbereiten des Injektionsvorgangs wird vorgeschlagen, daß jeder Ringsteg ein an der jeweiligen Seitenfläche des Vorsprung anliegendes kreisringförmiges Teil aufweist. Die als Zentrier- und Dichtringe dienenden separaten Ringstege lassen sich damit auf einfache Weise auf die Rohrenden aufziehen, die Rohrenden werden dann von entgegengesetzten Seiten in den Grundkörper eingeschoben und schließlich werden die Ringkörper auf die Enden des Grundkörpers aufgeschoben.

Die Ringstege können einen L- oder U-förmigen Querschnitt haben. Insbesondere wird aber vorgeschlagen, daß jeder Ringsteg einen L-förmigen Querschnitt hat und das kreisringförmige Teil sich höchstens bis zur inneren Mantelfläche des an diesem Teil anliegenden Rohrendes radial nach innen erstreckt. Die Ringstege schließen also bündig mit der Innenfläche der Rohre ab und führen zu keinem zusätzlichen Strömungswiderstand und zu zusätzlicher Wirbelbildung.

Auch die an den Enden des Grundkörpers anzusetzenden Ringkörper können unterschiedliche Formen haben. So kann die axial sich erstreckende Fläche jedes Ringkörpers an der äußeren oder an der inneren Mantelfläche des Grundkörpers anliegen. Bevorzugt ist jedoch, daß jeder Ringkörper einen L-förmigen Querschnitt hat und deren sich axial erstreckende Fläche an der äußeren Mantelfläche des Grundkörpers anliegt. Die Ringkörper sind damit infolge der verringerten Reibung besser aufzuschieben. Eine Zentrierung des Muffengrundkörpers und eine Abdichtung des umlaufenden Ringraumes wird dadurch erreicht, daß das Ende des kreisringförmigen Teils des Ringkörpers an der Außenfläche des Rohrendes anliegt.

Grundkörper, Ringkörper und Ringstege der erfindungsgemäßen Muffe können aus unterschiedlichem Material bestehen. Notwendig ist jedoch, daß dieses während der Klebephase nicht so weit aufgelöst wird, daß Klebstoff nach innen dringt. Klebstoff sollte natürlich auch möglichst nicht nach außen gelangen. Insbesondere ist es aber vorteilhaft, wenn der Grundkörper, die Ringkörper und die Ringstege aus dem gleichen Material bestehen. Dabei wird insbesondere vorgeschlagen, daß die Ringkörper und/oder die Ringstege aus PVC (Polyvinylchlorid), insbesondere PVC-Recyclat bestehen. In einer anderen vorteilhaften Ausgestaltung bestehen die Ringkörper und/oder die Ringstege aus LDPE (low density polyethylene).

Der als Anschlag für die Rohrenden dienende Vorsprung kann aus mehreren einzelnen Erhöhungen an der Innenfläche des Grundkörpers gebildet sein. Vorteilhaft ist jedoch, wenn der Vorsprung ein ringförmig umlaufender ununterbrochener Steg ist.

Im folgenden werden Ausführungsbeispiele der Erfindung anhand von Zeichungungen näher erläutert. Es zeigen
- Figur 1: einen Längsschnitt durch eine Rohrverbindung mit der erfindungsgemäßen Muffe, bzw. eine Ansicht davon,
- Figur 2: einen Schnitt A-A nach Figur 1,
- Figur 3: das Detail 24 nach Figur 1,
- Figur 4: den Ringkörper 8 nach Figur 3, zur Verdeutlichung einzeln dargestellt,
- Figur 5: das Detail 23 nach Figur 1,
- Figur 6: den Ringsteg 14 nach Figur 5, zur Verdeutlichung einzeln dargestellt,
- Figur 7: das Detail 24 nach Figur 1 in einer anderen Ausführungsform,
- Figur 8: den Ringkörper 8 nach Figur 7, zur Verdeutlichung einzeln dargestellt, und
- Figur 9: das Detail 23 nach Figur 1 in einer weiteren Ausführungsform.

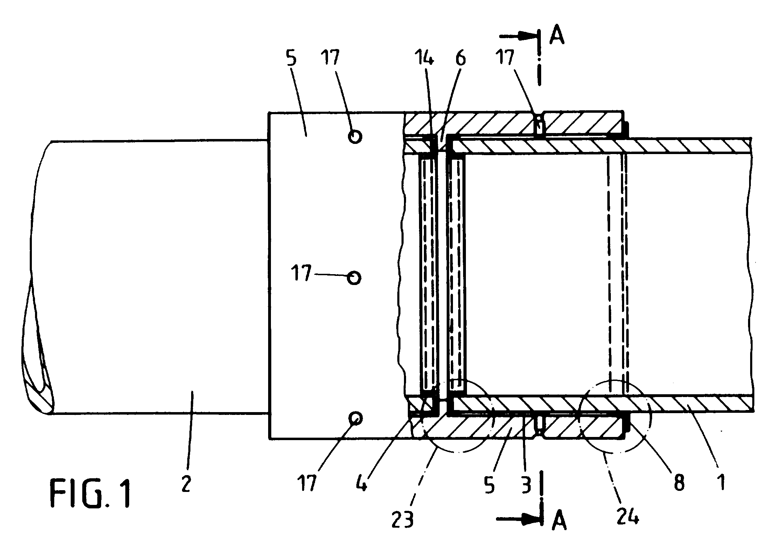

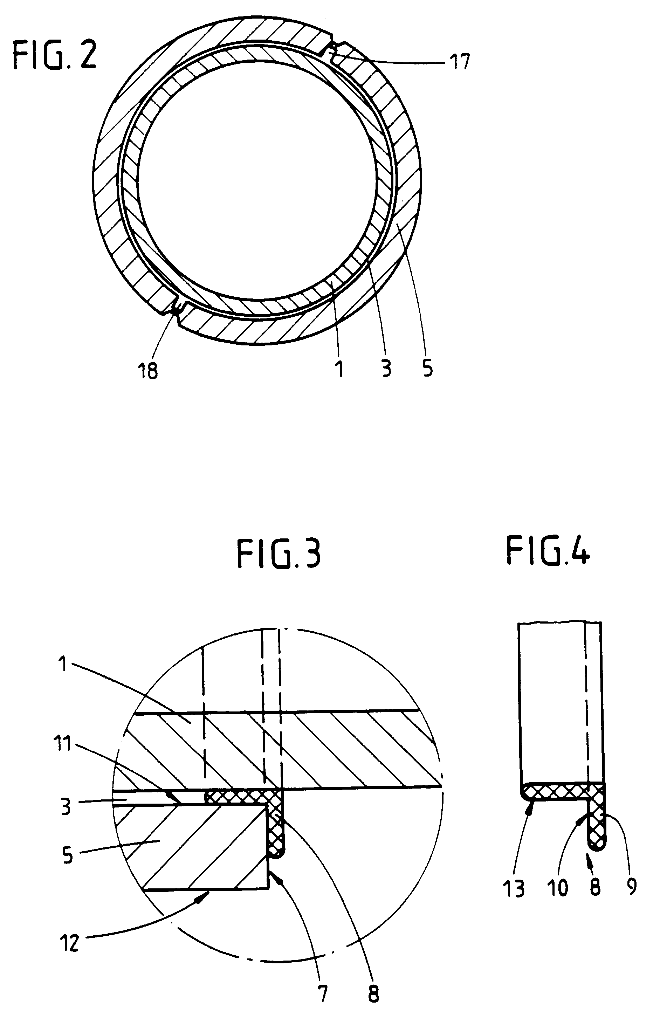

Figur 1 zeigt die Verbindung zweier Rohrenden 1 und 2 mit einer Ausführungsform der erfindungsgemäßen Muffe vor dem Injizieren von Klebstoff. Über die Rohrenden 1 und 2 ist der Grundkörper 5 der Muffe geschoben. Wie besonders in Figur 2 zu erkennen ist, werden zwei Ringräume 3 und 4 von der Innenfläche des zylindrischen Grundkörpers 5 und der Außenfläche der Rohrenden 1 und 2 gebildet. Die Ringräume 3 und 4 werden an den Enden des Grundkörpers 5 von Ringkörper 8 genannten Dichtungselementen und in der Mitte des Grundkörpers 5 von separaten Ringstegen 14 bzw. 15 begrenzt. Die Ringstege und Ringkörper dienen zum Abdichten des Ringraums und zum Zentrieren des Grundkörpers 5 auf den Rohrenden 1 und 2. Die axiale Lage der Rohrenden 1 und 2 innerhalb des Grundkörpers 5 ist durch den an der Innenseite des Grundkörpers umlaufenden stegartigen Vorsprung 6 vorgegeben.

Nachdem die Rohrenden zusammen mit den als Dichtungs- und Zentrierringen dienenden Ringstegen 14 und 15 bis zum Vorsprung 6 in den Grundkörper 5 eingeschoben und die Ringkörper 8 an den Enden des Grundkörpers 5 zwischen diesem und den Rohrenden festgeklemmt sind, wird durch die Injektionsöffnungen 17 Klebstoff eingespritzt. Dabei können mehrere solcher Öffnungen, wie in Figur 1 gezeigt ist, oder nur zwei solche Öffnungen 17, 18 nach Figur 2 vorgesehen sein. Die zweite Öffnung 18, die Austrittsöffnung, ist zur Kontrolle des Klebstoffverlaufs im Ringspalt vorgesehen. Nach dem Erhärten des Klebstoffs sind die Rohrenden 1 und 2 gas- und wasserdicht miteinander verbunden.

Die Figuren 3 bis 6 zeigen die Details 23 und 24 aus Figur 1. Die nach Figur 3 im Querschnitt L-förmigen Ringkörper liegen mit ihrem hohlzylindrischen Teil zwischen der inneren Mantelfläche 11 des Grundkörpers 5 und der Außenfläche des Rohrendes 1 und begrenzen so den Ringraum 3 zwischen diesen beiden Flächen. Der andere Schenkel des Ringkörpers 8, der kreisringförmige Teil, liegt mit seiner Innenfläche 10 an der Stirnfläche 7 des Grundkörpers 5 an. Er gewährleistet ein einfaches und dennoch exaktes Einpassen des Ringkörpers 8 zwischen Grundkörper 5 und Rohrende 1.

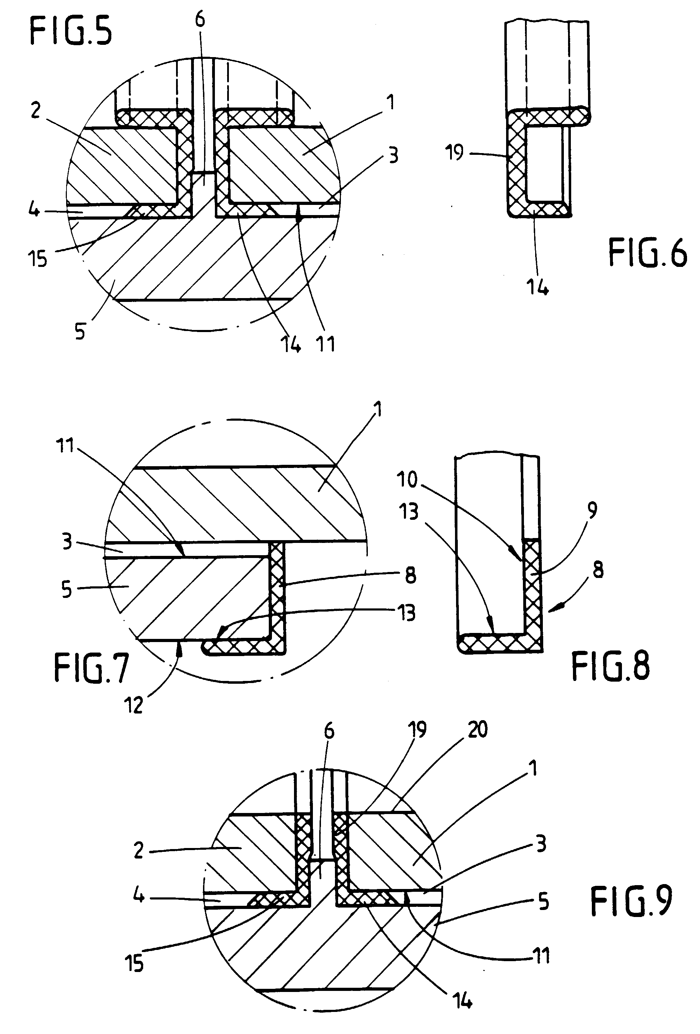

Die bei der eingangs genannten bekannten Muffe vorgesehenen, an die Innenfläche des Grundkörpers 5 angeformten Ringstege sind nach Figur 5 erfindungsgemäß durch Dicht- und Zentrierringe ersetzt. Diese separaten Ringstege 14 und 15 sind Teile von U-förmigen Ringen, die auf die Stirnflächen der Rohrenden 1 und 2 aufgeschoben sind.

Noch vorteilhaftere Ausführungsformen von Dicht- und Zentrierringen als jenen nach Figuren 3 bis 6 sind in den Figuren 7 bis 9 dargestellt. Die an den Enden des Grundkörpers 5 vorgesehenen Ringkörper haben ebenfalls L-Form. Der hohlzylindrische Teil des Ringkörpers 8 liegt mit seiner dem Grundkörper 5 zugewandten Fläche 13 nicht an der inneren Mantelfläche 11, sondern an der äußeren Mantelfläche 12 des Grundkörpers an. Der andere Schenkel des L, der kreisringförmige Teil 9 des Ringkörpers 8, sitzt mit seinem Ende fest auf der äußeren Mantelfläche des Rohrendes 1. Damit wird sowohl eine Zentrierung des Grundkörpers 5 als auch eine Abdichtung des Ringraums 3 erreicht. Durch den geringeren Reibungswiderstand läßt sich der Ringkörper 8 nach Figur 7 leichter aufschieben als der nach Figur 3.

Die als Ringstege 14, 15 dienenden Dicht- und Zentrierringe nach Figur 9 sind ebenfalls gegenüber denen nach Figur 5 verbessert. Der kreisringförmige Teil 19 ragt hier nicht mehr in den Innenraum der Rohre hinein, sondern schließt mit der inneren Mantelfläche 20 der Rohrenden 1 und 2 bündig ab. Eine Querschnittsverengung der Rohrleitung tritt nicht mehr auf.

Die Erfindung ist jedoch nicht auf die dargestellten Ausführungsformen beschränkt, die nur als Beispiele dienen.

### Bezugszeichenliste

- 1: Rohrende
- 2: Rohrende
- 3: Ringraum
- 4: Ringraum
- 5: Grundkörper
- 6: Vorsprung
- 7: Stirnfläche
- 8: Ringkörper
- 9: kreisringförmiger Teil
- 10: Fläche
- 11: Mantelfläche, innere
- 12: Mantelfläche, äußere
- 13: Fläche
- 14: Ringsteg
- 15: Ringsteg
- 17: Injektionsöffnung
- 18: Austrittsöffnung
- 19: kreisringförmiges Teil
- 20: innere Mantelfläche
- 23: Detail
- 24: Detail

## Patentansprüche

1. Muffe zum Verbinden zweier Rohrenden (1,2) durch Injizieren von Klebstoff in zwei zwischen der Außenfläche der Rohrenden (1,2) und der Innenfläche der Muffe gebildeten Ringräume (3,4), mit einem rohrförmigen Grundkörper (5), der einen sich von seiner Innenfläche radial nach innen erstreckenden Vorsprung (6) aufweist, dessen Seitenflächen einen Anschlag für die Stirnflächen der Rohrenden (1,2) bilden, mit als Zentrier- und Dichtringe vorgesehenen Ringkörpern (8), die eine radial nach innen gerichtete, zur Anlage an den Stirnflächen (7) des Grundkörpers (5) ausgebildete Fläche (10) und eine sich axial erstreckende, zur Anlage an einer der Mantelflächen (11, 12) des Grundkörpers (5) ausgebildete Fläche (13) haben, und mit einem an jeder Seite des Vorsprungs (6) angeordneten, an der inneren Mantelfläche (11) des Grundkörpers (5) umlaufenden und zum dichtenden und zentrierten Einsetzen der Rohrenden (1, 2) ausgebildeten Ringsteg (14, 15), wobei der Grundkörper (5), die Ringkörper (8) und die Ringstege (14, 15) nach dem Spritzgußverfahren hergestellt sind,
**dadurch gekennzeichnet**,
daß der Grundkörper (5) und die Ringstege (14, 15) aus separaten Teilen bestehen, jeder Ringsteg (14, 15) ein rohrförmiger, an der inneren Mantelfläche (11) des Grundkörpers (5) anliegender Zentrier- und Dichtring ist und die innere Mantelfäche (11) des Grundkörpers (5) im Bereich des Vorsprungs (6) bis auf diesen keine Vor- oder Rücksprünge aufweist.

2. Muffe nach Anspruch 2,
**dadurch gekennzeichnet,**
daß die innere Mantelfläche (5) des Grundkörpers bis auf den Vorsprung (6) und eventuelle Injektionsöffnungen (17) keine Voroder Rücksprünge aufweist.

3. Muffe nach Anspruch 1 oder 2,
**dadurch gekennzeichnet,**
daß jeder Ringsteg (14, 15) ein an der jeweiligen Seitenfläche des Vorsprungs (6) anliegendes kreisringförmiges Teil (19) aufweist.

4. Muffe nach Anspruch 3,
**dadurch gekennzeichnet,**
daß jeder Ringsteg (14, 15) einen L-förmigen Querschnitt hat und das kreisringförmige Teil (19) sich höchstens bis zur inneren Mantelfläche (20) des an diesem Teil anliegenden Rohrendes (1,2) radial nach innen erstreckt.

5. Muffe nach einem der Ansprüche 1 bis 4,
**dadurch gekennzeichnet**,
daß jeder Ringkörper (8) einen L-förmigen Querschnitt hat und dessen sich axial erstreckende Fläche (13) an der äußeren Mantelfläche (12) des Grundkörpers (5) und das Ende des kreisringförmigen Teils (9) des Ringkörpers (8) an der Außenfläche des Rohrendes (1, 2) anliegt.

6. Muffe nach einem der Ansprüche 1 bis 5,
**dadurch gekennzeichne**t,
daß der Grundkörper (5), die Ringkörper (8) und die Ringstege (14, 15) aus dem gleichen Material bestehen.

7. Muffe nach einem der Ansprüche 1 bis 6,
**dadurch gekennzeichnet,**
daß die Ringkörper (8) und/oder die Ringstege (14, 15) aus PVC, insbesondere PVC-Recyclat bestehen.

8. Muffe nach einem der Ansprüche 1 bis 6,
**dadurch gekennzeichnet,**
daß die Ringkörper (8) und/oder die Ringstege (14, 15) aus LDPE bestehen.

9. Muffe nach einem der Ansprüche 1 bis 8,
**dadurch gekennzeichnet,**
daß der Vorsprung (6) ein ringförmig umlaufender ununterbrochener Steg ist.

## Claims

1. A socket for connecting two pipe ends (1,2) by injection of adhesive into two annular spaces (3,4) formed between the outer face of the pipe ends (1,2) and the inner face of the socket, comprising a tubular shell (5) having a projection (6) which extends radially inwards from its inner face and of which the side faces form a stop for the end faces of the pipe ends (1,2); annular elements (8) which are provided as centering and sealing rings and which have a face (10) directed radially inwards to bear against the end faces (7) of the shell (5) and an axially extending face (13) designed to bear against one of the faces (11,12) of the shell (5); and an annular flange (14,15) which is arranged on each side of the projection (6), extends around the inner face (11) of the shell (5) and is designed for the sealing and centered insertion of the pipe ends (1,2), the shell (5), the annular elements (8) and the annular flanges (14,15) being made by injection molding, characterized in that the shell (5) and the annular flanges (14,15) consist of separate parts, each annular flange (14,15) is a tubular centering and sealing ring bearing against the inner face (11) of the shell (5) and, apart from the projection itself, the inner face (11) of the shell (5) has no projections or recesses in the region of the projection (6).

2. A socket as claimed in claim 1, characterized in that the inner face (5) of the shell has no projections or recesses except for the projection (6) itself and any injection openings (17).

3. A socket as claimed in claim 1 or 2, characterized in that each annular flange (14,15) has a circular part (19) adjoining the corresponding side face of the projection (6).

4. A socket as claimed in claim 3, characterized in that each annular flange (14,15) has an L-shaped cross-section and the circular part (19) extends radially inwards to at most the inner face (20) of the pipe end (1,2) adjoining that part.

5. A socket as claimed in any of claims 1 to 4, characterized in that each annular element (8) has an L-shaped cross-section and its axially extending face (13) bears against the outer face (12) of the shell (5), the end of the circular part (9) of the annular element (8) bearing against the outer face of the pipe end (1,2).

6. A socket as claimed in any of claims 1 to 5, characterized in that the shell (5), the annular elements (8). and the annular flanges (14,15) consist of the same material.

7. A socket as claimed in any of claims 1 to 6, characterized in that the annular elements (8) and/or the annular flanges (14,15) consist of PVC (polyvinyl chloride), more especially recycled PVC.

8. A socket as claimed in any of claims 1 to 6, characterized in that the annular elements (8) and/or the annular flanges (14,15) consist of low-density polyethylene (LDPE).

9. A socket as claimed in any of claims 1 to 8, characterized in that the projection (6) is an annularly extending uninterrupted flange.

## Revendications

1. Manchon pour assembler deux extrémités de tuyaux (1, 2) par injection de colle ou adhésif dans deux espaces annulaires (3, 4) formés entre la surface externe des extrémités de tuyaux (1, 2) et la surface interne du manchon, au moyen d'un corps principal (5) tubulaire présentant, sur sa surface interne, une saillie (6) qui s'étend radialement vers l'intérieur et dont les surfaces latérales forment une butée pour les surfaces frontales des extrémités de tuyaux (1, 2), au moyen de corps annulaires (8), prévus comme anneaux de centrage et d'étanchéité, Qui ont une surface (10) orientée radialement vers l'intérieur et devant prendre appui sur les surfaces frontales (7) du corps principal (5), et une surface (13) d'extension axiale, devant prendre appui sur l'une des surfaces (11, 12) de l'enveloppe du corps principal (5), et au moyen d'un rebord annulaire (14, 15) disposé de part et d'autre de la saillie (6), décrivant un cercle sur la surface enveloppe interne (11) du corps principal (5) et conçu pour assurer un emboîtement étanche et centré des extrémités de tuyaux (1, 2), le corps principal (5), les corps annulaires (8) et les rebords annulaires (14, 15) ayant été fabriqués selon le procédé de moulage par injection,
lequel manchon est caractérisé en ce que le corps principal (5) et les rebords annulaires (14, 15) consistent en éléments distincts, en ce que chaque rebord annulaire (14, 15) est une bague tubulaire de centrage et d'étanchéité reposant sur la surface enveloppe interne (11) du corps principal (5) et en ce que la surface enveloppe interne (11) du corps principal (5) ne présente pas de saillies ou de creux dans la zone de la saillie (6), sauf cette dernière.

2. Manchon selon la revendication 2, caractérisé en ce que la surface enveloppe interne (5) du corps principal ne présente pas de saillies ou de creux, sauf la saillie (6) et les éventuels orifices d'injection (17).

3. Manchon selon la revendication 1 ou 2, caractérisé en ce que chaque rebord annulaire (14, 15) présente une partie (19) en forme de couronne qui est en appui sur la surface latérale correspondante de la saillie (6).

4. Manchon selon la revendication 3, caractérisé en ce que chaque rebord annulaire (14, 15) a une section en forme de L et en ce que la partie (19) en forme de couronne s'étend radialement, vers l'intérieur, tout au plus jusqu'à la surface enveloppe interne (20) de l'une des extrémités de tuyaux (1, 2) reposant sur cette partie.

5. Manchon selon l'une des revendications 1 à 4, caractérisé en ce que chaque corps annulaire (8) a une section en L et sa surface (13) d'extension axiale prend appui sur la surface enveloppe externe (12) du corps principal (5) et l'extrémité de la partie (9) en forme de couronne du corps annulaire (8), sur la surface externe de l'extrémité de tuyaux (1, 2).

6. Manchon selon l'une des revendications 1 à 5, caractérisé en ce que le corps principal (5), les corps annulaires (8) et les rebords annulaires (14, 15) sont faits en un matériau identique.

7. Manchon selon l'une des revendications 1 à 6, caractérisé en ce que les corps annulaires (8) et/ou les rebords annulaires (14, 15) sont faits en PVC, en particulier en PVC recyclé.

8. Manchon selon l'une des revendications 1 à 6, caractérisé en ce que les corps annulaires (8) et/ou les rebords annulaires (14, 15) sont faits en PEbd.

9. Manchon selon l'une des revendications 1 à 8, caractérisé en ce que la saillie (6) est un rebord périphérique annulaire continu.
